# EUROPEAN PATENT APPLICATION

(11) **EP 4 660 085 A2**
(43) Date of publication of application: **10.12.2025**
(21) Application number: 25178946.7
(22) Date of filing: 27.05.2025
(51) Int. Cl.: B65B 5/10, B65B 25/00, B65B 35/06, B65B 35/38, B65B 57/10

(54) **A METHOD FOR PACKING ICE CREAM ITEMS AND AN ICE CREAM PICKING ROBOT**

(30) Priority: 05.06.2024 DK PA202470156
(71) Applicant: Gram Equipment A/S, 6000 Kolding (DK)
(72) Inventor: HØEG, Bendt Jensen, 8464 Galten (DK)
(74) Representative: Patentgruppen A/S

(57) **Abstract**

A method and system for packing ice cream items in ice cream compartments comprising, providing ice cream items on a conveyor and initiating a pick and place sequence. First step of the pick and place sequence is picking up a first predetermined number of ice cream items from the conveyor by a plurality of robot arms, in a second step of said pick and place sequence delivering said first predetermined number of ice cream items by said plurality of robot arms in at least two different ice cream compartments, in a third step of said pick and place sequence picking up a second predetermined number of ice cream items from said conveyor by said plurality of robot arms, in a forth step of said pick and place sequence delivering said second predetermined number of ice cream items by said plurality of robot arms in said at least two different ice cream compartments wherein at least one of said plurality of robot arms is delivering an ice cream item in a different ice cream compartment compared to said second step of said pick and place sequence.

## Description

### Field of the invention

The present invention relates to a method and a robot for packing ice cream items.

### Background of the invention

In the industry of ice cream products, it is critical to optimize the production line to be able to deliver specific ice cream products according to a customer demand. It is also critically to optimize the yield of the ice cream products produced in production line to avoid too much waste of ice cream items during the production and prevent breakdowns in the production line. Traditionally a production line for ice cream products is limited when ice cream items are packed in specific boxes because of the production line must slow down and thereby deliver less ice cream items. Another problem is that the specific number of ice cream items needed for a box will typically generate ice creams that are not picked, or robots are paused during a working period. Thus, a new method and system for packing ice cream items in a more efficient way in a production line are highly desirable.

### Summary of the invention

The inventors have identified the above-mentioned problems and challenges related to packing ice cream items, and subsequently made the below-described invention which may optimize the packaging process.

The invention relates to a method for packing ice cream items in ice cream compartments comprising:
providing ice cream items on a conveyor,
initiating a pick and place sequence comprising;
   in at first step of said pick and place sequence picking up a first predetermined number of ice cream items from said conveyor by a plurality of robot arms,
   in a second step of said pick and place sequence delivering said first predetermined number of ice cream items by said plurality of robot arms in at least two different ice cream compartments,
   in a third step of said pick and place sequence picking up a second predetermined number of ice cream items from said conveyor by said plurality of robot arms,
   in a forth step of said pick and place sequence delivering said second predetermined number of ice cream items by said plurality of robot arms in said at least two different ice cream compartments, wherein at least one of said plurality of robot arms is delivering an ice cream item in a different ice cream compartment compared to said second step of said pick and place sequence.

Thereby is provided an advantageous method of packing ice cream items. The present method is advantageous for a number of reasons which will be described here below.

The term ice cream item may be understood as an ice cream item anywhere along the way of a production line until the end of the production line. The ice cream item is to be understood as the same ice cream item along the production line where the ice cream item may be refined and enhanced along the production line until an ice cream product is made. The first ice cream item may be defined as an ice cream item, e.g., when a cone is placed on the transportation surface, when a mass of ice cream is shaped and divided from a ice cream former, when a coating has been added, when a wrapping is added or anywhere along the production line.

The term ice cream item may be a container for a mass of ice cream, such as e.g., a cone, an ice boat, a biscuit, a cookie or anything other edible for receiving ice cream. The ice cream item may be defined as when the first part of the ice cream product is being placed on a transportation surface. This may be when e.g., a cone or a biscuit is placed in e.g., a hole or on a tray of a transportation surface before being filled with ice cream. The first part of the ice cream item may also be when a mass of ice cream is being shaped and individual divided and positioned on a transportation surface or in a non-edible cup. The term ice cream item may be used until the final ice cream product is made, which may typically be when an ice cream product may be at the end of the production line or ready for sale.

The term ice cream item could be understood as a mass of ice cream manufactured prior to the ice cream former. The ice cream item type could be any of the following: ice cream, lemonade ice, water ice, popsicle, ice cream-sandwich, ice cream-cone, a lolly, gelato, frozen yogurt, granita, sorbet, kulfi, dondurma or any combination thereof. The ice cream item type could be in the size of a popsicle stick, a sandwich, a cone, an ice cream boat or an ice cream cake. The ice cream item type could further comprise other edible parts like caramel, chocolate, fruit juice, edible decoration, jam or any combination thereof. The ice cream item type could further be a vegan produced ice cream item. The ice cream could also be several different flavours of ice cream item and/or colours.

Furthermore, the ice cream item could comprise a stick, a container, a cone, or any other relevant part for holding the ice cream item when eaten. The parts related for holding the ice cream item when eaten could be of an edible material like e.g., a waffle or cookie. The part related for holding the ice cream items could also be a non-edible like a stick or a cup of plastic or wood.

The ice cream item type could be an ice cream item type without any holding means which is only wrapped in paper, foil, plastic bag, recycled material, cardboard, carton, bamboo or directly in a box. The ice cream items may also be double wrapped in both a foil, paper or bag and the after that being place in a box, where the box may comprise multiple ice cream items. The ice cream item types without any means for holding the ice cream item could be like a sandwich, a boat, a bar, or bites which would typically be eating by hand. The ice cream item type without any means for holding the ice cream item could also be in the size of a cake which would typically be eaten by flatware.

The pick and place sequence is to be understood as a sequence where a plurality of robot arms is picking up a predetermined number of ice cream item from a conveyor. The sequence continues with the plurality of robot arms moving with the picked-up ice cream items to another conveyor comprising at least two compartments. The plurality of robot arms is then placing the ice cream items in the least two compartments. The sequence then continues with the plurality of robot arms returning to the first conveyor for picking up a second predetermined number of ice cream items. The picked-up ice cream items of the second predetermined number of ice cream items are then moved and placed in the at least two compartments by the plurality of robot arms. When the plurality of robot arms is placing the second set of predetermined number of ice cream items at least one of the robot arms are placing an ice cream item in another compartment compared to the first time of placing ice cream items.

The pick and place sequence are to be understood as a sequence that may be initiated at any given time during the production of ice cream products. A plurality of ice cream items may be transferred from the conveyor to the ice cream compartments an arbitrary number of times before initiating the pick and place sequence. The pick and place sequence may also be initiated as the production line is started at the beginning of a work shift or day.

It is advantageous to have a pick and place sequence when packaging ice cream items in a compartment or a box. The packaging of the ice cream items may be packed in an uneven number in the ice cream compartment or box. The plurality of robot arms may pack at least two ice cream compartments at the same time by delivering an even number to a first ice cream compartment and simultaneously an uneven number to a second ice cream compartment. In the next step the first ice cream compartment receives an uneven number, where the uneven number is equal to the uneven number already delivered to the second ice cream compartment. One of the robot arms that delivered an ice cream item to the second compartment in the first are now delivering to the first ice cream compartment. The rest of the plurality of robot arms are delivering to the same ice cream compartment as the first delivering step. In that way both ice cream compartments end up with the same number of ice cream items and both ice cream compartments with an uneven number of ice cream items. The process of delivering ice cream items may comprise multiple ice cream compartments or boxes. The process may also comprise more steps of delivering ice cream items from a conveyor to the ice cream compartments.

It is advantageous to have the pick and place sequence in order to deliver ice cream items in more than one step. When delivering ice cream items in more than one step the ice cream items may be delivered and placed in layers and thereby optimizing the space in the ice cream compartments or boxes. The optimized boxes are advantageous in order to save material when packaging the ice cream items. It is also advantageous in saving volume in the ice cream compartments. This may help for optimal storage of the ice cream items when being transported, placed in warehouse or in a freezer at home.

The pick and place sequence is also advantageous in the process of packaging ice cream items. The process may help in filling more ice cream compartments at the same time and thereby generating a greater yield in the production of ice cream items.

The pick and place sequence may be a sequence which is constantly repeated when ice cream items are being packed in an ice cream production line. However, the pick and place sequence may also be a part of a bigger process for producing ice cream items. The pick and place sequence may be initiated when a certain amount of ice cream items are available on the conveyor and ready to be picked. The pick and place sequence may also be used to initiate other process steps for the production of ice cream items. The pick and place sequence may be activated continuously in the process of making ice cream items before, after or in-between other process steps of making ice cream items.

It is advantageous for the yield to have a pick and place sequence where all ice cream items are grabbed from a first conveyor each time. The odd number of ice cream items may typically force either one of the robot arms to pass an ice cream item and thereby lower the efficiency of the method. The number of ice cream items may also force the plurality of robot arms to pass an ice cream item, when the number of robot arms is not enough. When picking and delivering ice cream items in the pick and place sequence and thereby forcing a robot arm to change its delivering pattern. When the robot arm changes its delivering pattern the plurality of robot arms is suitable for packing an odd number of ice cream items without missing ice cream items on the conveyor or having robot arms which are not picking and delivering.

The plurality of robot arms is to be understood as individual robotic arms configured for picking up an ice cream item from a conveyor and placing the ice cream item on another conveyor or in a compartment. The plurality of robot arms may be connected to the same ice cream picking robot or may be a plurality of individual robots picking and placing ice cream items. The plurality of robot arms is all located within a working zone, wherein the conveyor and the ice cream compartments are located to ensure the plurality of robot arms are capable of picking and placing ice cream items. The working zone for the plurality of robot arms may be understood as a covering distance from where the robot arm is fixed to the robot and to the reach of the other end of the robot arm. Each robot arm may be suitable for being placed in a slit in a pitch plate and typically all of the plurality of robot arms will be placed in individual slits of the pitch plate. The robot arms may be moved within the slit of the pitch plate based on if the robot arms are about to pick or place the ice cream items.

The term conveyor is to be understood as any kind of conveyor for conveying ice cream items along a production line for producing ice cream products. The conveyor may be conveying plates suitable for conveying ice cream items placed upon the plates. The plates may also comprise holes for e.g., cones for ice cream items or ice cream items with a cone. The conveyor may be a pocket conveyor, bulking conveyor, belt conveyor or any kind of conveyor suitable for conveying ice cream items.

Ice cream compartments are to be understood as any room, space or compartment for placing ice cream items. The ice cream compartments may be placed on a conveyor where the ice cream items may be conveyed to a final packaging station, e.g., a sideloader. The ice cream compartments may also be understood as boxes, cartons or container of e.g., paper or cardboard used as the final packaging for the ice cream items.

In a preferred embodiment, the pick and place sequence is repeated at least two times.

It is advantageous to repeat the pick and place sequence for additional filling the ice cream compartments with e.g., four layers of ice cream. It may also be advantageous to repeat the pick and place sequence as soon as new ice cream items are available on the conveyor or new empty ice cream compartments are available. The repeating of the pick and place sequence may be understood as the pick and place sequence is continuously running as the sequence is repeated as soon as the sequence before is done. The pick and place sequence may also wait a bit of time before being repeated. The waiting time may vary from milliseconds to seconds, minutes or hours between two pick and place sequences.

In a preferred embodiment, the pick and place sequence further comprises:
in at fifth step of said pick and place sequence picking up a third predetermined number of ice cream items from said conveyor by a plurality of robot arms,
in a sixth step of said pick and place sequence delivering said ice cream items by said plurality of robot arms in said at least two different ice cream compartments.

In a preferred embodiment, the sixth step of said pick and place sequence wherein at least one of said plurality of robot arms is delivering an ice cream item in a different ice cream compartment compared to one of said previous steps of delivering ice cream items in said pick and place sequence.

In a preferred embodiment, prior to the first step of said pick and place sequence in a first previous step of said pick and place sequence picking up a first predetermined number of ice cream items from said conveyor by a plurality of robot arms,
in a second previous step of said pick and place sequence delivering said first predetermined number of ice cream items by said plurality of robot arms in at least two different ice cream compartments, and
wherein in said second step of said pick and place sequence said plurality of robot arms is delivering a first predetermined number of ice cream items in said at least two different ice cream compartments, wherein said plurality of robot arms are delivering ice cream items in the same at least two different ice cream compartments of said previous second step.

The first previous step and the second previous steps are to be understood as two steps in the pick and place sequence which are initiated and run before initiating the first step of the pick and place sequence. The first previous step is also to be understood as a step being initiated prior to initiating the second previous step of the pick and place sequence. The first previous step and the second previous step may typically be similar to the first step and the second step of the pick and place sequence but is not limited to being similar. It is advantageous to have a first previous step and a second previous step when producing ice cream products. The production of ice cream products is more flexible when having two previous steps prior to the first step of the pick and place sequence.

It is advantageous to have a fifth and sixth step in the pick and place sequence when delivering ice cream items in more than two ice cream compartments or in more than two layers of ice cream items. When adding the additional fifth and sixth steps more complex packaging is available for the ice cream compartments.

In a preferred embodiment, the second predetermined number of ice cream items are the same number of ice cream items as said first predetermined number of ice cream items.

It is advantageous to have the plurality of robot arms picking the same number of ice cream items at each step in the pick and place sequence where ice cream items are being picked. The plurality of robot arms does not have to pick up two ice cream items by one individual robot arm. The plurality of robot arms may be able to pick up and secure the ice cream item without losing it and thereafter placing it in the ice cream compartment. None of the plurality of robot arms has to stop working due to a smaller amount of ice cream items being delivered to the ice cream compartments. Thereby the process of packing ice cream items may be optimized, and a greater yield is produced.

In a preferred embodiment, the delivering of said ice cream items in said forth step is being delivered in a second layer in said ice cream compartments.

It is advantageous to stack the ice cream items in multiple layers to optimize the space where the ice cream items are being packed in the ice cream compartments. The need for different boxes or packaging may vary from each production line or the ice cream item type and therefore it is advantageous to stack ice cream items in multiple layers.

In a preferred embodiment, the at least two ice cream compartments are at least three ice cream compartments.

It is advantageous to pack multiple ice cream compartments at the same time in order to get a higher yield of the production. When the ice cream items are being packed in at least three different ice cream compartments it facilitates different pick and placing patterns comparted to pick and placing patterns for two ice cream compartments. Three ice cream compartments may be advantageous when the pick and place sequence is running steps one to six with when e.g., 10 ice cream items are being packed in total in each ice cream compartment.

In a preferred embodiment, the compartments are boxes.

It is advantageous to have ice cream compartments which are boxes. The boxes may be made of paper, cardboard or any other material for packing a predetermined number of ice cream items for sale. The ice cream items in the boxes may be conveyed directly to a wrapping station for wrapping up the box and send it to customers or to trucks for transporting cargo and ice cream products. The packaging of the ice cream items may be done at the same location and thereby optimizing the process of making ice cream items. The ice cream items may be placed in the boxed as a part of a topload-machine.

In a preferred embodiment, the delivering said ice cream items is done vertically.

It is advantageous to deliver the ice cream items vertically when the ice cream items are being delivered to an ice cream compartment being a box or final package product. The box may be sealed as the next step in the process and the final package with ice cream items are ready for sale. This may optimize the process of producing ice cream products.

In a preferred embodiment, the plurality of robot arms in said steps of said pick and place sequence are guided by a pitch plate associated with said plurality of robot arms and guiding the plurality of robot arms in at least two different, preferably lateral, placing patterns.

It is advantageous to have a pitch plate to guide the robot arms as an easy mechanical solution for changing the positions of the robot arms.

In a preferred embodiment, the placing patterns are different in said second and fourth step of said pick and place sequence.

It is advantageous to have two different positions for delivering ice cream items for at least one of the robot arms. When changing the delivering position for a robot arm it may be easier to adjust the number of ice cream items being packed in an ice cream compartment. It may also be advantageous when different types of ice cream items are being packed in the ice cream compartments to ensure the right number of specific types of ice cream items in an ice cream compartment.

In a preferred embodiment, the placing pattern are modified by exchanging said pitch plate with another pitch plate.

It is advantageous to change from one pitch plate to another as the slits in pitch plate may fit a certain production and way to pack a certain ice cream item type. The production line may be easier to change from one production to another by changing the pitch plate and the delivering pattern to fit a predetermined packaging.

In a preferred embodiment, the placing pattern are modified before or after said pick and place sequence.

It is advantageous to change the placing pattern by a simple mechanical exchange of the pitch plate. The production line may be stopped before starting a new type of ice cream being produced. The new ice cream items may be packed in a different way in the ice cream compartment due to either size or weight of the ice cream items. The new ice cream items may also be packed in a another way due to a labelling on a box. The pitch plate may also be changed when the same ice cream item is to be produced but a change in the sales box facilitates another number of ice cream items. It is advantageous to modify the pick and place pattern when the ice cream items are to be packed in an anniversary box with e.g., 11 ice cream items instead of the standard box with e.g., 9 ice cream items. The simple change of a pitch plate may facilitate the change in how the ice cream items are being packed in the ice cream compartments.

In a preferred embodiment, the placing pattern is associated with an ice cream item type.

It is advantageous to pack the ice cream items based on what type of ice cream items are manufactured. Different types of ice cream items may be packed in ice cream compartments according to shape or size depending on the specific ice cream item type. Different delivering positions in the pitch plate may be used for different types of ice cream items.

In a preferred embodiment, before initiating the second step of said pick and place sequence, monitoring if said second predetermined number of ice cream items is available for being picked on said conveyor.

In a preferred embodiment, during the pick and place sequence sensing by a sensor if said second predetermined number of ice cream items is available on said conveyor.

In a preferred embodiment, the second step of said pick and place sequence is initiated upon determination that said second predetermined number of ice cream items is available for being picked on said conveyor.

It is advantageous to initiate the second step of a pick and place sequence when all ice cream items needed for two or more ice cream compartments are available. This may facilitate a smooth and clean transferring of ice cream items without any unintentional stops of the method and system.

The invention further relates to an ice cream picking robot for ice cream items comprising:
a plurality of robot arms, wherein each of said plurality robot arms are configured for picking and placing an ice cream item,
a pitch plate comprising elongated slits defining a placing pattern,
wherein each of said plurality of robot arms are configured for movement between at least two positions defined by each elongated slit of said pitch plate, and wherein the plurality of robot arms are configured to execute the pick and place sequence according to the method describes above.

It is advantageous to have an ice cream picking robot for picking and placing ice cream items from a conveyor to ice cream compartments to optimize the yield in the production of ice cream products. The ice cream picking robot may pick all the ice cream items with all the robot arms without having a robot arm passing. E.g., when nine ice cream items are to be delivered to two ice cream compartments with nine robot arms. The robot arms are all working at the same time and no robot arm has to pass an ice cream item in any of the steps. Compared to e.g., ten robot arms picking five plus five ice cream items in the first step and picking four plus four in the next picking step to pick a total of nine ice cream items for each compartment. In the next step two robot arms are not lifting any ice cream items.

The ice cream picking robot facilitates a more flexible way to pack ice cream items in ice cream compartments in a production line. The way the robot arms are configured for delivering ice cream items in different compartments from each pickup may optimize the total number of ice cream products produced.

The two positions are to be understood as two delivering positions, where one of the delivering positions are also a picking position. A delivering positions is a location within a slit of the pitch plate, where a robot arm is positioned when an ice cream item is being delivered to an ice cream compartment. In the same way a picking position is a location within the slit where the robot arm is positioned when picking up an ice cream item. The picking and delivering positions may be located at the same position within the slit but in another embodiment of the invention it may be at different positions. The two delivering positions may be used in two different steps, when the ice cream items are being delivered to the ice cream compartments by the ice cream picking robot. In another embodiment of the invention the number of delivering positions in each slit of the pitch plate may be more than two delivering positions, e.g., three delivering positions, four delivering positions or more. In another embodiment of the invention the ice cream picking robot may comprise more than one picking position in each slit of the pitch plate.

In a preferred embodiment, the at least two positions defined by each elongated slit of said pitch plate are at least three positions.

The three positions of the pitch plate may be understood as two delivering positions and one picking position. It is advantageous to have a picking position adjusted according to the conveyor the ice cream items are being picked from. The two delivering positions in the slits of the pitch plate is advantageous to optimize the flexible packaging of the ice cream compartments.

In a preferred embodiment, the elongated slits of said pitch plate is defining a placing pattern.

In a preferred embodiment, the elongated slits of said pitch plate is defining a picking pattern.

It is advantageous to have a mechanical pitch plate with multiple slits defining a picking pattern of said ice cream item. The picking pattern may be understood as a starting position of said plurality of robot arms, where the plurality of robot arms are moved in the slit of the pitch plate before delivering the ice cream items to the ice cream compartments.

In a preferred embodiment, the placing pattern includes a picking pattern.

In a preferred embodiment, the placing pattern are defined by the mutual positioning of said plurality of robot arms and said pitch plate.

In a preferred embodiment, the ice cream picking robot is configured for changing said pitch plate with a second pitch plate.

In a preferred embodiment, the second pitch plate comprises a different number of slits compared to said pitch plate.

It is advantageous to place the plurality of robot arms in different slits to form a different placing pattern without changing the pitch plate.

In a preferred embodiment, the second pitch plate comprises a second placing pattern.

It is advantageous to have an additional pitch plate with a second placing pattern when producing and packaging ice cream items. The second pitch plate with the second placing pattern may facilitate an easy change in the pattern for packaging the compartments with ice cream item. The change to another pitch plate may be a simple and mechanical way to process and pack ice cream items in a different way in the compartments. The second pitch plate may also be an easy way to change the packaging from e.g., 11 ice cream items in each of two compartments to 9 ice cream items in each of two compartments.

The invention further relates to an ice cream picking robot for ice cream items comprising:
a plurality of robot arms, wherein each of said plurality robot arms are configured for picking and placing an ice cream item,
and wherein the plurality of robot arms executes the pick and place sequence according to the method mentioned above.

### The drawings

Various embodiments of the invention will in the following be described with reference to the drawings where:
fig. 1a-b illustrates a method for packing ice cream items,
fig. 2a-c illustrates a method for packing ice cream items,
fig. 3a-c illustrates pitch plates,
fig. 3d-e illustrates alternative pitch plates,
fig. 4 illustrates a robot arm with a suction cup,
fig. 5 illustrates a system for packing ice cream items, and
fig. 6 illustrates a method for a pick and place sequence.

### Detailed description

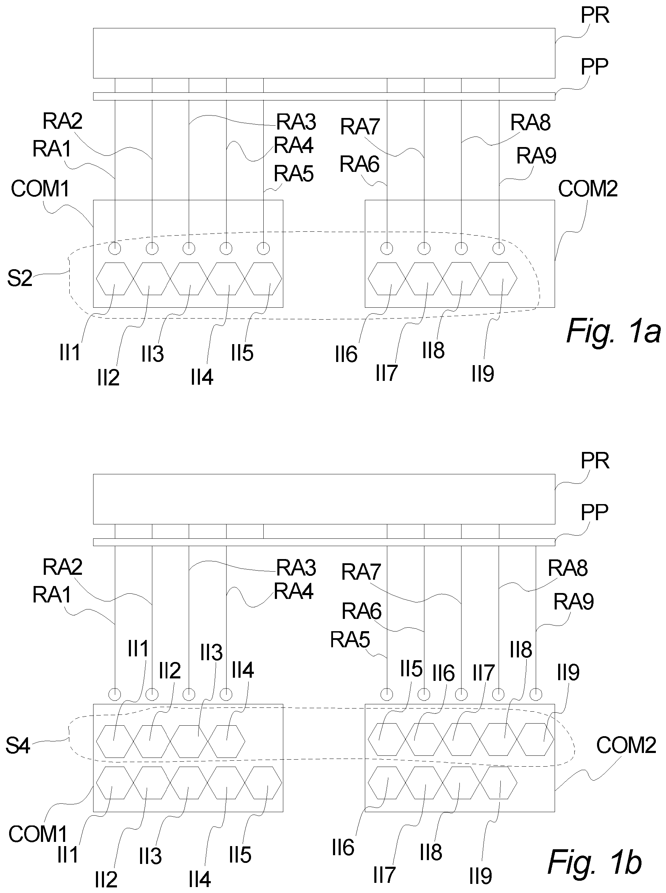

Fig. 1a illustrates a step in a method for packing ice cream items II in ice cream compartments COM, where the method comprises a pick and place sequence PPS. The pick and place sequence comprises multiple steps where the fig. 1a illustrates a second step S2 where ice cream items II are being delivered to the ice cream compartments. The two ice cream compartments COM1, COM2 with ice cream items II placed inside are illustrated in a sideview with the ice cream items II placed in one layer. The first ice cream compartment COM1 has five ice cream items II placed next to each other and the second ice cream compartment COM2 has four ice cream items II next to each other. The ice cream items II has been delivered to the ice cream compartments COM1, COM2 by a plurality of robot arms RA. Fig. 1a does not show the first step of the pick and place sequence where the ice cream items are being picked.

In fig. 1b a fourth step S4 of the pick and place sequence is illustrated. The ice cream items II are being delivered to the same ice cream compartments COM as in the second step S2 of the pick and place sequence PPS. The first nine ice cream items II1-9 from the second step S2 of the pick and place sequence PPS are still at the bottom of the ice cream compartments COM at the time, when the next nine ice cream items II1-9 are being delivered. In this fourth step, four ice cream items II have been placed in the first ice cream compartment COM1 and five ice cream items II in the second ice cream compartment COM2. The ice cream items II has been placed in a second layer in the ice cream compartments COM. In another embodiment of the invention the ice cream items II that are being delivered in a fourth step may also be placed in the same layer as the ice cream items II from the second step depending on the size of the ice cream compartments. The ice cream item II9 that has been placed in the fourth step of the pick and place sequence PPS are placed in the same layer as the other ice cream items II5-8 from the fourth step. The ice cream item II9 from the fourth step may in another embodiment of the invention be placed in the same layer as the ice cream items II6-9 from the second step of the pick and place sequence PPS.

The ice cream items II has been delivered with the same plurality of robot arms RA used in the second step of the pick and place sequence PPS. The robot arms RA1-4 has in both the second step and the fourth step of the pick and place sequence PPS delivered ice cream items II to the first ice cream compartment COM1. The robot arms RA6-9 has in both the second step and the fourth step of the pick and place sequence delivered ice cream items II to the second ice cream compartment COM2. The robot arm RA5 has in the second step of the pick and place sequence delivered an ice cream item II5 to the first ice cream compartment COM1 and in the fourth step of the pick and place sequence delivered an ice cream item II5 to the second ice cream compartment COM1.

The ice cream items II that has been delivered by the plurality of robot arms, where the plurality of robot arms may be connected to the same ice cream picking robot. In another embodiment of the invention the plurality of robot arms may be individually robots each with one robot arm.

Fig. 1a-b illustrates a method where nine ice cream items II1-9 are being placed in an ice cream compartment COM1 in multiple steps. In another embodiment of the invention the number of ice cream items II being packed in an ice cream compartment may by any other number of ice cream items. The number of ice cream items may typically vary from e.g., 3 to 31 ice cream items, especially 5, 7, 11, 13 or 15 ice cream items. The number of ice cream compartments where the ice cream items are packed simultaneously may also vary according to the specific production from two ice cream compartments multiple compartments. Typically, number of ice cream compartments may be three, four or five compartments being packed at the same time. The number of ice cream compartments may also be 10, 20, 25, 30 or 40 ice cream compartments. The combination of number of ice cream items being packed and number of ice cream items compartments may change according to the production line or what type of ice cream item is being processed.

The method illustrated in fig. 1a is performed by changing positions of the plurality of robot arms within the slits. The positions of the plurality of robot arms within the slits may be changed by moving the pitch plate or by using the pitch plate as a guidance for the plurality of robot arms. The pitch plate may move or guide the plurality of robot arms within the slit from a picking position to one or more delivering positions.

In another embodiment of the invention the plurality of robot arms may be moved or guided by actuators to the picking and delivering positions. The plurality of robot arms may also be moved or guided by air cylinders which may push the plurality of robot arms back and forth within the slits. The plurality of robot arms may also be placed on a centre arm on a rotating eccentric to move and guide one or more of the robot arms. There may be other ways to move or guide the robot arms according to the provisions of the invention.

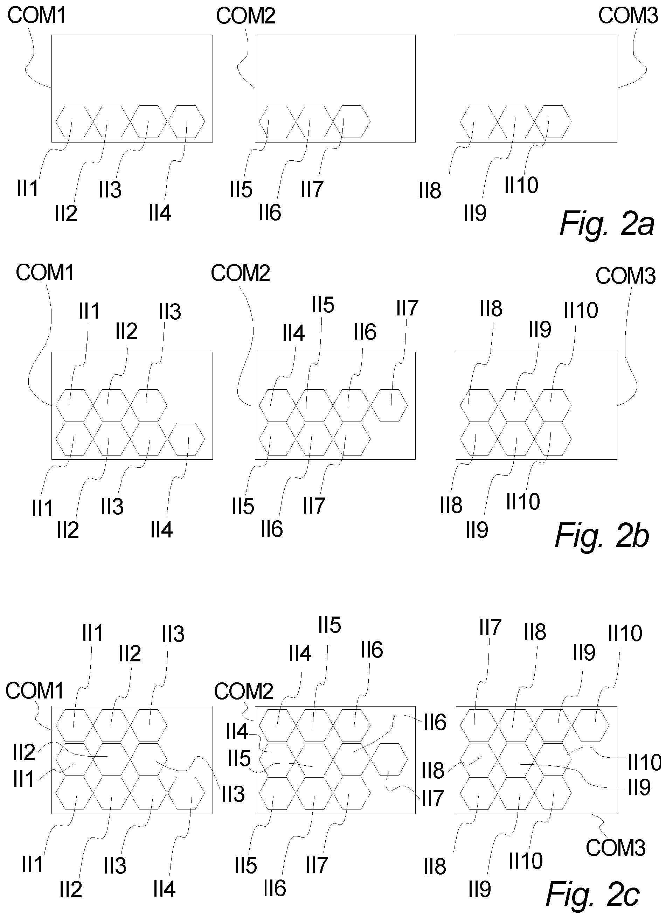

Fig. 2a illustrates an embodiment of the invention where 30 ice cream items II are being packed in three ice cream compartments COM at the same time. Fig. 2a illustrates a second step S2 of the pick and place sequence PPS, where the first ice cream compartment COM1 has received four ice cream items II1-4, the second ice cream compartment COM2 has received three ice cream items II5-7 and the third ice cream compartment COM3 has received three ice cream items II8-10 by the plurality of robot arms (not shown). All the ice cream has been picked from a conveyor and delivered to the ice cream compartments COM at the same time. The ice cream items II has been placed in the three ice cream compartments in one layer.

Fig. 2b illustrates a fourth step S4 of the pick and place sequence PPS, where the first ice cream compartment COM1 has received additional three ice cream items II1-3, the second ice cream compartment COM2 has received additional four ice cream items II4-7 and the third ice cream compartment COM3 has received additional three ice cream items II8-10. The ice cream items II in this step are placed in a second layer in the three ice cream compartments COM. In another embodiment of the invention the ice cream items II may also be placed in the same layer as the ice cream items from the second step S2 of the pick and place sequence PPS, e.g., the ice cream item II7 in the fourth step may be placed next to the ice cream item II7 from the second step. The ice cream items have all been picked by the plurality of robot arms from a conveyor and delivered to the ice cream compartments. The robot arm that delivered ice cream item II4 in the second step to the first ice cream compartment COM1 has changed its delivering compartment in the fourth step where the ice cream item II4 has been delivered to the second ice cream compartment COM2. In another embodiment of the invention, it may be any of the robot arms changing its delivering compartment from the second step to the fourth step of the pick and place sequence. It may also be multiple robot arms changing the ice cream compartment where the ice cream items are being delivered in the fourth step.

Fig. 2c illustrates a sixth step S6 of the pick and place sequence PPS and the last step in this embodiment of the invention. In the sixth step S6 another ten ice cream items are added to the ice cream compartment COM. The first ice cream compartment COM1 has received three more ice cream items II1-3, the second ice cream compartment COM2 has received three more ice cream items II4-6 and the third ice cream compartment COM3 has received four more ice cream items II7-10. The ten ice cream items II added in the sixth step are all placed in a third layer in the ice cream compartments COM. In another embodiment of the invention the ice cream items delivered in the sixth step may be placed in the same layers as the ice cream items II in the second or fourth step. It may also be only a few of the ice cream items in the sixth step that are being placed in already existing layers and the rest of the ice cream items in a third layer. All ice cream compartments COM has been packed with ten ice cream items II.

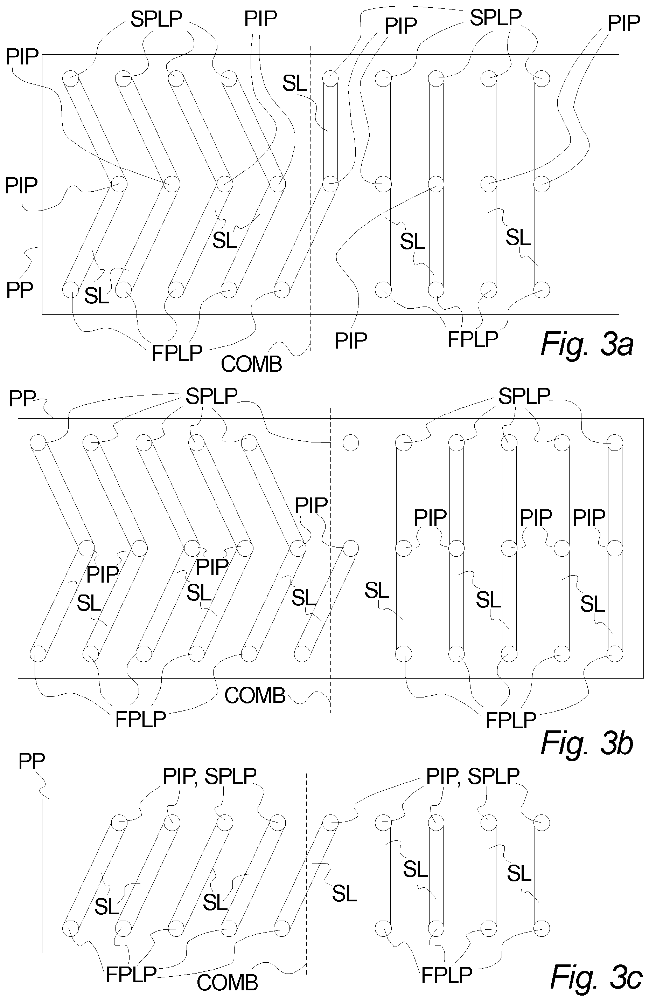

Fig. 3a illustrates a pitch plate PP in a perspective from above for an ice cream picking robot. The pitch plate PP is illustrated with nine elongated slits SL. Each slit SL comprises three positions for a robot arm RA, where the middle position is a picking position PIP and the two outer positions are delivering positions PLP (FPLP, SPLP). The delivering positions at the bottom of the pitch plate PP is the positions for the robot arms (not shown) when delivering ice cream items II in a second step of a pick and place sequence. The second step of the pick and place sequence is the first step where ice cream items are being delivered to the ice cream compartments. The positions when delivering ice cream items II in the second step are the first delivering positions FPLP. The first delivering positions FPLP are to be understood as the positions in the slits SL of the pitch plate PP where all the robot arms are located when delivering the first batch of ice cream items. The same applies to the second delivering positions SPLP where the delivering positions are to be understood as the position in the pitch plate PP where all the robot arms are located when delivering the second batch of ice cream items. The delivering positions PLP are located at the end of the slit SL as the last part of the slit SL. The delivering positions may stretch from the end of the slit SL to approximately the middle of the slit SL along the direction of the slit SL.

In another embodiment of the invention the difference between the first delivering positions and the second delivering positions may be associated with the type of ice cream items being delivered to the ice cream compartments. The first layer in the ice cream compartments may be one type of ice cream items and the second layer may be another type of ice cream items. The first layer of ice cream items may be delivered by the plurality of robot arms in the first delivering positions and the second layer of ice cream items may be delivering when the plurality of robot arms is located in the second delivering positions. In another embodiment of the invention, it may be more different types of ice cream items e.g., when three, four or more layers are being packed in the ice cream compartments.

The slits SL extends from a distance from the longitudinal side of the pitch plate PP over the middle of the pitch plate to a distance from the other longitudinal side of the pitch plate PP. The distance may vary according to number of slits, different ice cream item productions, different pick and place sequences, the material of the pitch plate or any other thing related to optimizing the pitch plate. Four of the slits are straight from first delivering position FPLP to the second delivering position SPLP and five of the slits SL are angled from the first delivering position FPLP to the second delivering position SPLP in the picking positions PIP. In another embodiment of the invention all the slits may be angled in the picking positions or at other positions along the slits. The slits may be angled in both a right and left direction according to the direction of the slit. The slits may be angled at more than one position along the length of the slit. All the slits may be designed with the same structure, designed with different structures or any combination of different and/or similar structures. The pitch plate may be shape rectangularly, circularly or any other geometric form. The slits may have any shape in the pitch plate to form a placing pattern for picking and delivering ice cream items.

The first delivering positions FPLP are divided by an ice cream compartment boundary COMB which indicate which ice cream compartment COM the ice cream items II are being delivered in. On the left side of the ice cream compartment boundary COMB the ice cream items II are being delivered in the first ice cream compartment COM1 and on the right side of the ice cream compartment boundary COMB the ice cream items II are being delivered in the second ice cream compartment COM2. At the outer delivering positions PLP in the top of the pitch plate PP is the second delivering positions SPLP. In the second delivering positions SPLP eight of the nine ice cream items II are being delivered in the same ice cream compartment COM as in the first delivering positions FPLP. The middle-slit does change its delivering-pattern from the first ice cream compartment to the second ice cream compartment as the slit changes from one side of the ice cream compartment boundary COMB to the other. The ice cream compartment boundary COMB is to be understood as an imaginary line, where the robot arms on one side delivers ice cream items to a first ice cream compartment and on the other side to a second ice cream compartment. The ice cream compartment boundary may also be a physical line which is marked on the pitch plate to indicate where the different ice cream compartments changes.

In the embodiment illustrated in fig. 3a the pitch plate PP is designed to deliver a different number of ice cream items to two specific ice cream compartments COM. The number of delivered ice cream items may always be four and five to the two respective ice cream compartments. The ice cream compartment which receives five ice cream items would depend on the delivering position PLP robot arm in the middle-slit.

In another embodiment of the invention more than one of the slits in the pitch plate may be configured to change the position of the robot arms from delivering in one ice cream compartment to another ice cream compartment. The slits may be designed to cross the ice cream compartment boundary to change the delivering place for more than one of the robot arms in the method. Additional it may also be any other slit than the middle-slit which is configured to change the position of the robot arm to deliver ice cream items in a different ice cream component.

In another embodiment of the invention the pitch plate may be configured to deliver ice cream items to more than two ice cream compartments. The pitch plate would have more than one ice cream compartment boundary. The pitch plate may have different slits crossing the respective ice cream compartment boundaries to change the delivering pattern of ice cream items. The pitch plate may also have one or more slits which crosses multiple ice cream compartment boundaries for a specific robot arm to deliver in multiple ice cream compartments.

The pitch plate is made of aluminium but may also be made of stainless stell, plastic or any other material suitable for being used in an ice cream production.

Fig.3b illustrates an embodiment of the invention with a pitch plate PP configured for picking and placing eleven ice cream items at the same time in two different ice cream compartments (not shown). The pitch plate PP comprises eleven picking positions PIP along the middle of the pitch plate PP. At the bottom and at the top of the pitch plate PP is twenty-two delivering positions PLP with eleven first delivering positions FPLP at the bottom and eleven second delivering positions SPLP at the top. The robot arm placed in the middle-slit SL is configured for changing ice cream compartment COM. The robot arm in the middle-slit can change from a first ice cream compartment when in said first delivering position FPLP to a second ice cream compartment when in said second delivering position SPLP. The middle-slit has the first delivering position FPLP placed on one side of the ice cream compartment boundary COMB and the second delivering position SPLP placed on the other side of the ice cream compartment boundary COMB. One side of the ice cream compartment boundary COMB indicates that ice cream items are being delivered in a first ice cream compartment and the other side of the ice cream compartment boundary COMB indicated that the ice cream items are being delivered in a second ice cream compartment.

In other embodiments of the invention a pitch plate may be designed with another number of slits, picking positions and / or delivering positions. The number of slits, picking positions and / or delivering positions may be defined according to the production line or to a customer demand.

Fig. 3c illustrates an embodiment of the invention where the picking positions PIP and the second delivering position SPLP are at the same positions in the pitch plate PP. In another embodiment of the invention, it may also be a first delivering positions FPLP which is located at the same place as the picking position PIP in the pitch plate PP. The pitch plate PP comprises nine slits SL where the first outer positions of the slits SL are the picking positions PIP and the second delivering positions SPLP. The second outer position of the slits SL are the first delivering positions FPLP.

In another embodiment of the invention there may be any number of slits in the pitch plate. The number of slits crossing the ice cream compartment boundary may be one or more slits. The location of the ice cream compartment boundary may be located anywhere along the pitch plate to divide where the robot arms are delivering ice cream items.

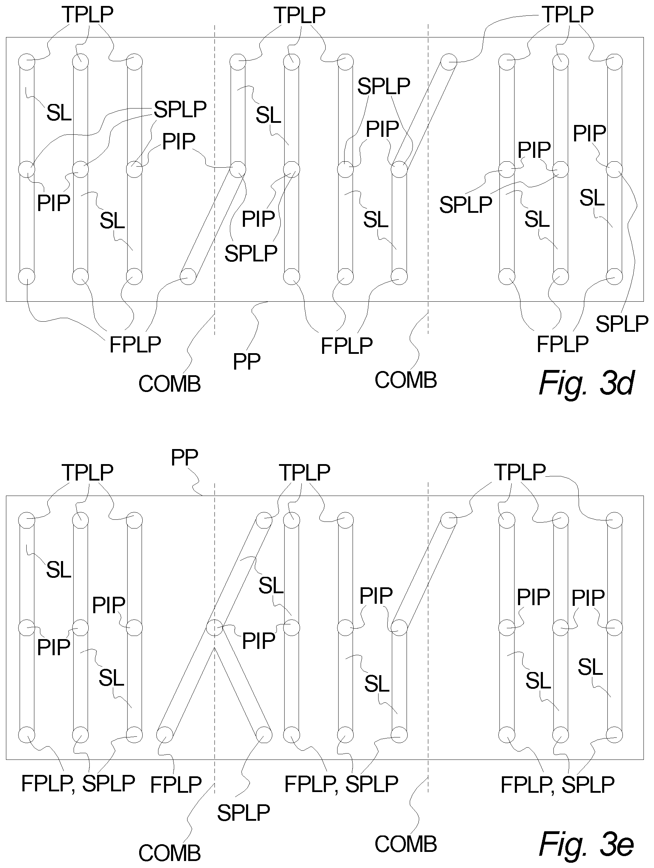

Fig. 3d illustrates a pitch plate PP with three delivering positions FPLP, SPLP, TPLP and one picking positions PIP along the different slits SL. The second delivering positions SPLP are located at the same positions as the picking positions PIP. The pitch plate PP comprises two slits SL which are crossing the ice cream compartment boundaries COMB and thereby are configured for changing the placing patterns. The placing pattern of ice cream items may be changed from the first delivering positions to the second delivering positions and to the third delivering positions. When all the robot arms are placed in the first delivering positions FPLP the ice cream compartment to the left receives four ice cream items. The middle and the right ice cream compartment both receives three ice cream items when the robot arms are in the first delivering positions FPLP. When all the robot arms are placed in the second delivering positions SPLP the middle compartment receives four ice cream items while the left and the right ice cream compartments both receives three ice cream items. At last, when all the robot arms are in the third delivering positions TPLP the ice cream compartment to the right receives four ice cream items while the middle and the left ice cream compartments receive three ice cream items each. The pitch plate PP illustrated in the fig. 3d is ideal for packing ice cream items as illustrated in the method in fig. 2a-c.

Fig. 3e illustrates a pitch plate PP with ten slits SL configured for adjusting the position of a plurality of robot arms. Each slit SL may comprise one robot arm. Each slit has more than one delivering position PLP and one picking position PIP. The picking positions are approximately located along the middle of the pitch plate PP. At the ends of the slits SL along the edge of the pitch plate PP is located a plurality of delivering positions PLP. Along one side of the pitch plate PP the delivering positions are either first delivering positions FPLP or second delivering positions SPLP. At nine of the locations within the slits SL of the pitch plate PP the first delivering positions and second delivering positions share the same locations. In one slit SL the slit SL splits into two different paths with a first delivering position FPLP at one end of the slit and a second delivering position SPLP at the other end. The slit SL that splits into two different delivering positions has the first delivering positions FPLP on one side of an ice cream compartment boundary COMB and the second delivering position SPLP placed on the other side of the ice cream compartment boundary COMB. The placing of the robot arm in either of these two slits indicate if all the other delivering positions along that side of the pitch plate PP are a first delivering position FPLP or a second delivering position SPLP. The third delivering positions TPLP are all located at the opposite side of the pitch plate PP.

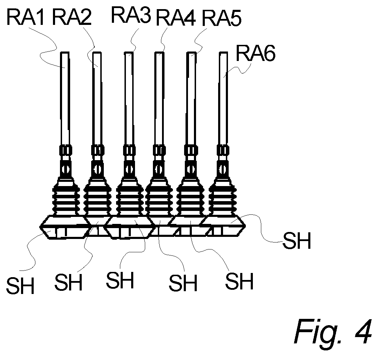

Fig. 4 illustrates six robot arms RA1-6 where the robot arms RA are configured for picking ice cream items. Each of the robot arms RA comprises a suction head SH at the end of the robot arm RA. The suction head SH is configured to attach an ice cream item II to the robot arm RA by making a vacuum between the robot arm RA and the ice cream item II. The suction head SH may be one or more suction cups, one or more suction plates or any kind of device suitable for generating a vacuum between the ice cream item and the robot arm.

In another embodiment of the invention the robot arm may comprise a gripper or a locking mechanism instead of a suction head to pick up the ice cream items. The six robot arms RA1-6 are connected to an ice cream picking robot (not shown) which is configured for running a pick and place sequence for ice cream items. The six robot arms RA and the ice cream picking robot may further be connected to a controller (not shown) which is suitable for initiating a pick and place sequence. In another embodiment of the invention each of the robot arms may be connected to an individual ice cream picking robot, where the ice cream picking robots are configured to initiate and run a pick and place sequence for ice cream items. The activation of the suction may be controlled individually for each of the robot arms or they may be controlled together according to the desired pick and place sequence by a controller (not shown).

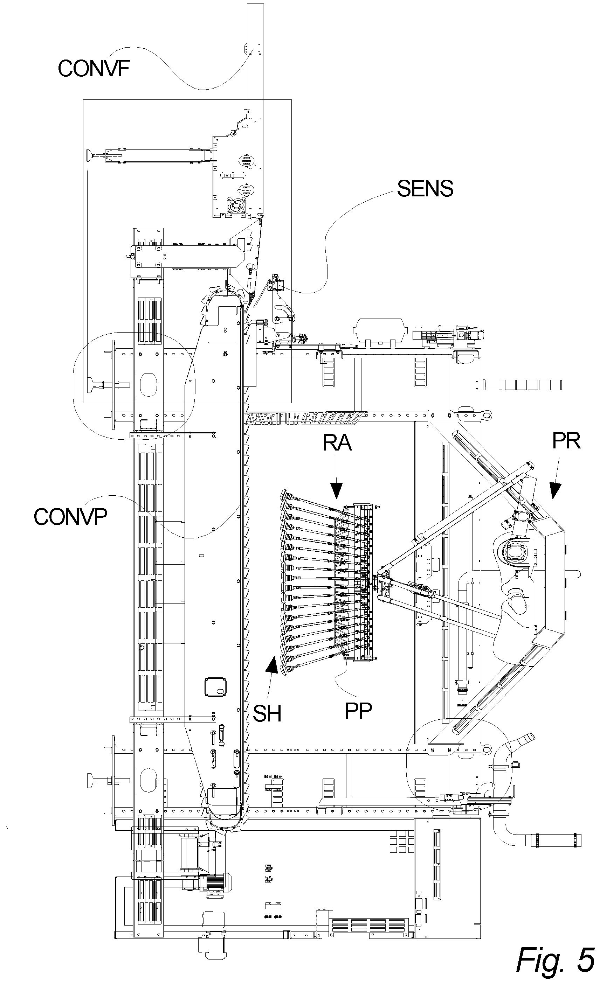

Fig. 5 illustrates a system for packing ice cream items. The system comprises a first conveyor CONVF where ice cream items (not shown) are being conveyed from an earlier part of the production line to a pocket conveyor CONVP. The system for picking ice cream items from the pocket conveyor CONVP and placing the ice cream items in an ice cream compartment. The conveyor CONVP where the ice crem items II are picked is a pocket conveyor but may be any kind of conveyor. A sensor SENS is placed above the pocket conveyor CONV and at the end of pocket conveyor CONV which is next to the first conveyor CONVF. The sensor SENS is used for sensing ice cream items and a controller (not shown) is used to correctly fill the pocket conveyor CONVP with ice cream items. The sensor SENS may sense if e.g., a second step of a pick and place sequence may be initiated based on the number of ice cream items available on the pocket conveyor CONV.

An ice cream picking robot with a plurality of robot arms RA are located above the pocket conveyor CONVP and the ice cream compartments (not shown). The ice cream picking robot PR comprises a pitch plate PP with longitudinal slits for robot arms RA. The robot arms RA may be moved within the slit of the pitch plate PP in order to pick up and deliver ice cream items. The plurality of robot arms RA has a suction head SH to grab the ice cream items from the pocket conveyor CONV and place the ice cream items in the ice cream compartments. The suction head SH may in another embodiment of the invention be a gripper, a suction cup or a suction plate. The ice cream picking robot PR is configured to initiate a pick and place sequence of the ice cream items to transfer the ice cream items. The ice cream picking robot PR may be steady in the process and only the plurality of robot arms RA may move during the transferring of ice cream items. The ice cream picking robot PR may also move above the pocket conveyor CONV and ice cream compartments to optimize the packing of ice cream items.

The system in fig. 5 is illustrated with 18 robot arms RA configured for picking ice cream items from the pocket conveyor CONV and to deliver the ice cream items in ice cream compartments. In another embodiment of the invention the number of ice cream compartments and / or the number of robot arms may vary and be a number which is suitable for a specific ice cream production.

The system may comprise a controller (not shown) which is associated with electronics and mechanical components, e.g., including those illustrated in the present embodiment in fig. 5, facilitating the automated execution of the herein described system and method.

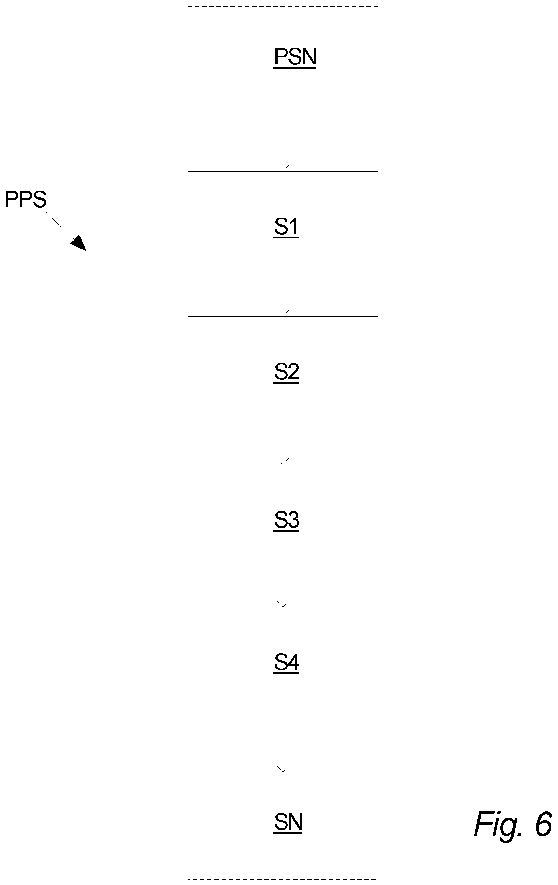

The method for packaging ice cream items using a pick and place sequence PPS is illustrated in fig. 6. In the first step S1 of the pick and place sequence PPS a number of ice cream items are being picked from a conveyor by a plurality of robot arms. The number of ice cream items being picked is a predetermined number and may depend on the how the ice cream items are to be packed in the specific ice cream production. The ice cream items are being picked by the plurality of robot arms by e.g., a suction cup or a grabber to secure the ice cream items. The plurality of robot arms picks the ice cream items approximately simultaneously. The plurality of robot arms then lifts the ice cream items from the conveyor and starts to transfer the ice cream items in a direction to the ice cream compartments.

In the second step S2 of the pick and place sequence PPS the plurality of robot arms is delivering the ice cream items that were picked up in the first step S1. The ice cream items are being delivered and placed in two ice cream compartments. In another embodiment of the invention the ice cream items being delivered in the second step S2 of the pick and place sequence may be delivered in more than two ice cream compartments. The ice cream items are being placed in one layer in each of the ice cream compartments by the plurality of robot arms. The ice cream items are being delivered in the two ice cream compartments approximately simultaneously.

In the third step S3 of the pick and place sequence the plurality of robot arms are picking up a number of ice cream items from the conveyor. The ice cream items are being picked approximately simultaneously. The number of picked ice cream items in the third step S3 is the same number of ice cream items being picked in the first step S1. In another embodiment of the invention the number of ice cream items picked in step S3 may be different to the number of ice cream items picked in the first step S1. The robot arms then transfer the ice cream items towards the ice cream compartments.

In the fourth step S4 of the pick and place sequence PPS the picked ice cream items in the third step S3 is being delivered to the two ice cream compartments. One of the robot arms is delivering an ice cream item to the other ice cream compartment of the two ice cream compartments compared to the delivering of ice cream items in the second step S2. All other robot arms are delivering ice cream items in the same ice cream compartment as they delivered ice cream items in the second step S2. In another embodiment of the invention more than one robot arm may change the ice cream compartment in the fourth step in which ice cream items are delivered compared to the ice cream compartment in the second step S2.

The pick and place sequence PPS may comprise additionally and / or optionally steps SN in the method. The steps may be a fifth and sixth step which may correspond to repeat the third and fourth step. The next steps may also be similar to the first and second steps of the pick and place sequence. The optionally and / or additionally steps may also be steps prior to said first step S1. The steps prior to said first step S1 may be a first previous step PS1 or a second previous step PS2, where ice cream items are picked from a conveyor and placed in ice cream compartments. In other embodiments of the invention the additionally steps may be both prior or after the pick and place sequence. The additional steps may also be added in between two pick and place sequences.

### List of reference signs:

- COM: Ice cream compartment,
- COMB: Ice cream compartment boundary,
- CONV: Conveyor
- CONVF: First conveyor
- CONVP: Pocket conveyor
- II: Ice cream item
- PP: Pitch plate,
- PR: Ice cream placing robot,
- PIP: Picking position,
- PLP: Delivering position,
- FPLP: First delivering position,
- SPLP: Second delivering position,
- TPLP: Third delivering position,
- PPS: Pick and place sequence,
- RA: Robot arm(s)
- S1-n: Steps of pick and place sequence,
- PS-n: Steps of pick and place sequence prior to the first step.
- SENS: Sensor
- SH: Suction head
- SL: Slit(s)

## Claims

1. A method for packing ice cream items in ice cream compartments comprising:
providing ice cream items (II) on a conveyor (CONV),
initiating a pick and place sequence (PPS) comprising;
in at first step (S1) of said pick and place sequence (PPS) picking up a first predetermined number of ice cream items (II) from said conveyor (CONV) by a plurality of robot arms (RA),
in a second step (S2) of said pick and place sequence delivering said first predetermined number of ice cream items (II) by said plurality of robot arms (RA) in at least two different ice cream compartments (COM1, COM2),
in a third step (S3) of said pick and place sequence (PPS) picking up a second predetermined number of ice cream items (II) from said conveyor (CONV) by said plurality of robot arms (RA),
in a forth step (S4) of said pick and place sequence (PPS) delivering said second predetermined number of ice cream items (II) by said plurality of robot arms (RA) in said at least two different ice cream compartments (COM1, COM2), wherein at least one of said plurality of robot arms (RA) is delivering an ice cream item (II) in a different ice cream compartment (COM1, COM2) compared to said second step of said pick and place sequence.

2. A method according to claim 1, wherein said pick and place sequence (PPS) further comprises:
in at fifth step (S5) of said pick and place sequence (PPS) picking up a third predetermined number of ice cream items (II) from said conveyor (CONV) by a plurality of robot arms (RA),
in a sixth step (S6) of said pick and place sequence delivering said ice cream items (II) by said plurality of robot arms (RA) in said at least two different ice cream compartments (COM1, COM2).

3. A method according to claim 2, wherein in said sixth step (S6) of said pick and place sequence wherein at least one of said plurality of robot arms (RA) is delivering an ice cream item (II) in a different ice cream compartment (COM1, COM2) compared to one of said previous steps of delivering ice cream items (II) in said pick and place sequence (PPS).

4. A method according to any of the preceding claims, wherein prior to said first step (S1) of said pick and place sequence (PPS) in a first previous step (PS1) of said pick and place sequence (PPS) picking up a first predetermined number of ice cream items (II) from said conveyor (CONV) by a plurality of robot arms (RA),
in a second previous step (PS2) of said pick and place sequence (PPS) delivering said first predetermined number of ice cream items (II) by said plurality of robot arms (RA) in at least two different ice cream compartments (COM1, COM2), and
wherein in said second step (S2) of said pick and place sequence (PPS) said plurality of robot arms (RA) is delivering a first predetermined number of ice cream items (II) in said at least two different ice cream compartments (COM1, COM2), wherein said plurality of robot arms (RA) are delivering ice cream items (II) in the same at least two different ice cream compartments (COM1, COM2) of said previous second step.

5. A method according to any of the preceding claims, wherein said delivering of said ice cream items in said forth step is being delivered in a second layer in said ice cream compartments.

6. A method according to any of the preceding claims, wherein said delivering said ice cream items (II) is done vertically.

7. A method according to any of the preceding claims, wherein said plurality of robot arms (RA) in said steps of said pick and place sequence (PPS) are guided by a pitch plate (PP) associated with said plurality of robot arms (RA) and guiding the plurality of robot arms in at least two different, preferably lateral, placing patterns.

8. A method according to claim 7, wherein said placing patterns are different in said second and fourth step of said pick and place sequence (PPS).

9. A method according to any of claims 7-8, wherein said placing pattern is associated with an ice cream item type.

10. A method according to any of the preceding claims, wherein before initiating said second step (S2) of said pick and place sequence (PPS), monitoring if said second predetermined number of ice cream items (II) is available for being picked on said conveyor (CONV).

11. An ice cream picking robot (PR) for ice cream items comprising:
a plurality of robot arms (RA), wherein each of said plurality robot arms (RA) are configured for picking and placing an ice cream item (II),
a pitch plate (PP) comprising elongated slits (SL) defining a placing pattern,
wherein each of said plurality of robot arms (RA) are configured for movement between at least two positions defined by each elongated slit (SL) of said pitch plate (PP).

12. An ice cream picking robot according to claim 11, wherein said at least two positions defined by each elongated slit of said pitch plate are at least three positions.

13. An ice cream picking robot according to any of claims 11-12, wherein said elongated slits of said pitch plate is defining a placing pattern and / or picking pattern.

14. An ice cream picking robot according to any of claims 11-13, wherein said placing pattern and / or picking pattern are defined by the mutual positioning of said plurality of robot arms and said pitch plate.

15. An ice cream picking robot according to claims 11-14 (PR) for ice cream items comprising:
a plurality of robot arms (RA), wherein each of said plurality robot arms (RA) are configured for picking and placing an ice cream item (II),
and wherein the plurality of robot arms (RA) executes the pick and place sequence (PPS) according to the method of claims 1-10.
